# EUROPEAN PATENT SPECIFICATION

(11) **EP 1 703 757 B1**
(45) Date of publication and mention of the grant of the patent: **30.01.2008**
(21) Application number: 05290589.0
(22) Date of filing: 16.03.2005
(51) Int. Cl.: H04Q 7/38

(54) **Method for carrying out a handover in a communications network**
Verfahren zur Weiterreichung in einem Kommunikationsnetzwerk
Méthode pour effectuer un transfert dans un réseau de communication

(43) Date of publication of application: 20.09.2006
(73) Proprietor: Alcatel Lucent, 75008 Paris (FR)
(72) Inventor: Hofmann, Dr. Dirk, 74321 Bietigheim-Bissingen (DE)
(74) Representative: Schmidt, Werner Karl

(56) References cited:
- EP-A- 1 081 972
- EP-A- 1 081 974

## Description

### Field of the invention

The invention relates to communication networks, and in particular to wireless cellular communication networks. More importantly it refers to methods and devices for initiating a handover when a mobile station comes close to a region which is known to exhibit a poor signal quality for mobile stations. The achievements of the invention facilitate a mobility management in homogeneous and heterogeneous mobile networks.

### Background and prior art

The radio link quality within radio access networks such as GSM, UMTS or WLAN depends on many factors, some of which can hardly be influenced by the network operator. Multipath reception due to obstacles in the transmission path and varying atmospheric conditions are just two examples which may lead to a high absorption of the transmitted signal, or to high interference contributions to the received signal. As a consequence, the signal quality encountered by mobile stations varies from place to place. When a mobile station which is connected to a certain base station moves around it may reach such a region with a poor signal quality abruptly. In this case the data rate drops, data packets may be lost, or the connection may break down altogether. In UMTS systems this situation can be avoided by macrodiversity, which means that the mobile station has connections to two or more base stations or cells respectively.

US 6,321,090 B1 discloses a mobile communication system with a position detection to facilitate a hard handover. The cellular system of this US patent determines the position of a mobile station moving from place to place. If it comes in a static handover region defined as the region of overlap between adjacent cells a handover to another base station is initiated.

EP 1,081,974 A2 discloses a system for performing a handover of a wireless unit using location information for the wireless unit to determine whether to hand over the wireless unit and/or to which base station to hand over the wireless unit. For example, a wireless unit can have a location system, such as a global positioning system (GPS), which determines the location of the wireless unit. The wireless unit can obtain location information for the wireless unit and provide the location information to the serving base station. From the location information, the serving base station can determine that the wireless unit is leaving the coverage area of the serving base station and may need to be handed over. The serving base station or MSC then can determine to which base station the wireless unit is handed over to, based on the location information.

EP 1,081,972 A2 discloses a system for determining coverage in a wireless communications system using location information for a wireless unit. The wireless communications system determines and/or receives location information for the wireless unit along with other information associated with the location information. The information by location can be used to represent the coverage of a geographic region. For example, during communications between a serving base station and a wireless unit, the serving base station could receive and/or determine signal quality measurements of a forward link and/or of a reverse link at a particular location.

### Summary of the invention

It is an object of the present invention to provide a method and corresponding devices which make sure that the signal quality received by a mobile station exhibits less pronounced geographical variations.

This object and other objects are solved by the features of the independent claims. Further embodiments of the invention are described by the features of the dependent claims. It should be emphasized that any reference signs in the claims shall not be construed as limiting the scope of the invention.

A first aspect of the invention refers to a method for carrying out a handover in a communication network whereby the communication network has at least a first base station and a second base station. The method comprises the steps of measuring the geographical position of the mobile station while the mobile station communicates with the first base station, comparing the geographical position with data comprising information on the location of geographical regions, whereby the signal quality in these regions is known to be worse than a predefined level with respect to at least one preselected base station, carrying out measurements on the signal quality of the second base station when the mobile station comes close to such a region of the first base station, and performing a handover to the second base station if the quality of signals from the second base station is sufficient to take over the service.

This method is based on the idea that obstacles in the transmission path, which are at least partially responsible for unsatisfactory reception conditions, depend on the position of the base station with respect to the mobile station. If a handover to a second base station is carried out the transmission path to the mobile station is changed such that other obstacles within the new transmission path govern the new signal quality. In other words the signal quality at a given location is not an absolute quantity, but is a quantity dependent on the position of the base station with which the mobile station communicates.

However, in order to avoid the problems encountered in the prior art the signal quality after a handover must be better than before. Therefore the signal quality for the geographical area covered by a base station must be known in detail. The geographical area might be a cell of a cellular communication network. More importantly, regions within these geographical areas covered by a preselected base station must be known in which the signal quality is worse than a predefined level. In other words, regions with poor signal quality with respect to a preselected base station must be known.

If these regions are known for the base stations of a communication network a handover can be initiated well before the mobile station enters a region with a poor signal quality. In order to do this the geographical position of the mobile station and thus its proximity to such a region is determined. If the mobile station communicates with a first base station and is close to such a region with a poor signal quality with respect to the first base station, and is thus outside such a region, a second base station is identified which provides a better signal quality in said region. Measurements of the signal quality of the second base station are carried out in order to ensure that the signal of the second base station is sufficient to take over the connection. The handover then serves to anticipate a worsening of the radio link quality.

The above-mentioned method avoids a drop in the signal quality caused by situations in which the mobile station enters a region of poor signal quality, and by situations in which the mobile station is handed over to a base station offering insufficient signal quality. The data rate is more constant and a loss of data packets is reduced. Furthermore, a breakdown of the connection is less likely because the quality of the connection that can be expected after the handover is ensured through measurements before it is decided to perform the handover. Another advantage is that the invention facilitates a seamless mobility within and between networks belonging to different communication standards.

A mobile station according to the invention might be a mobile phone, a laptop, a notebook, a PDA or similar electronic devices.

There are at least two ways in which the above-mentioned method is carried out.

In a first alternative the mobile station measures its geographical position and transfers this information to the communication network. In order to know which base station might serve the mobile station in the alternative, and might do this with a good signal quality, the mobile station sends the above information to the communication network. The communication network determines the proximity of the mobile station to a geographical region with poor signal quality of the serving cell. The last step assumes that the communication system knows where these geographical regions are located. When the mobile station is close to such a region, the communication network requests the mobile station to carry out measurements on the signal quality of a neighbouring cell of the communication network, and carries out the handover if the signal quality of the neighbouring cell is sufficient to take over the service. Normally, this is done by a base station controller controlling the operation of a multitude of base stations. In the alternative this is done by a base station.

In a second alternative the mobile station knows where the geographical regions of poor signal quality with respect to a preselected base station are located. The corresponding data is stored in a storage memory of the mobile station, and the mobile station measures its geographical position. It determines the proximity to a geographical region with poor signal quality with the help of the data, which is stored in its storage memory. If it comes close to such a region of the serving link, the mobile station carries out measurements on the signal quality of a link of a neighbour cell and, if the signal quality of the link of the neighbour cell is sufficient to take over the service, sends a request for a handover to the communication network. In order to know which base station might serve the mobile station in the alternative, and might do this with a good signal quality, the mobile station may perform measurements on the serving link and appropriate links of neighbour cells and may complement the request for a handover with these measurement results. Then the network automatically performs a handover, or simply uses this request as one additional parameter in the decision whether a handover should be performed or not.

Furthermore the method described above can be carried out in homogenous networks as well as in heterogeneous networks. In the first case the first base station and the second base station satisfy the same standard for communication networks. As an example, both base stations provide UMTS services. In the second case the base stations satisfy different standards for communications systems. As an example, the first base station provides UMTS services, and the second base station belongs to a WIMAX system or a WLAN system.

In the above-mentioned second alternative for carrying out the method according to the invention the data is stored in a storage memory of the mobile station. In order to limit the memory space needed for that purpose it is suggested that the data stored in the mobile station refers to a geographical area of predefined spatial extension, and that the mobile station is located in this geographical area. The size of this geographical area can be chosen to be smaller or larger depending on the memory space available. For practical reasons it will only refer to a small area if the mobile station is always used in the same area, for example between home and place of employment. To save memory space only base stations with the same radio access technologies the mobile station can use might be stored in the memory space. The geometrical shape of the geographical area might be chosen according to the needs and may be cell-like.

For practical reasons it might be desirable that the data covers a large geographical area such as a whole country in cases when the mobile station is used by a highly mobile owner. On the other hand it is desirable that a mobile station only stores data limited to a certain region as explained in the last paragraph. Both needs can be accomplished by storing the data within the communication network, and updating the data of the mobile station accordingly.

All data might be on a central server of the communication network, or may be on a multitude of servers distributed over the network. In the latter case each of the servers might be associated with a base station controller, whereby the data each refers to the geographical area covered by such a base station controller.

Updating the data of the mobile station might be necessary because the mobile station has moved and reaches the boundary of the geographical area covered by its data.

Updating may also be necessary because the signal quality has permanently changed within the geographical area covered by the data stored in the mobile station. A permanent change might be due to new obstacles in the transmission path of base stations located in the proximity of the mobile station. These obstacles may be new buildings which change the signal quality as explained above. A permanent change may also be due to a change in the infrastructure of the communication network. The position of the antennas of a base station might have been re-collocated or further antennas or new base stations/access points might have been installed. In the case of permanent changes the data is updated when the signal quality within the geographical area covered by the data has changed. This can be done when the signal traffic is low such as during the night.

As mentioned above one possibility to carry out the method according to the invention is that the mobile station stores appropriate data and requests a handover to a second base station. Accordingly, another aspect of the invention is a communication network which has means for carrying out a handover from a first base station to a second base station upon request from a mobile station.

According to the prior art the radio network controller (RNC) is responsible for handovers in the case of UMTS systems. For carrying out the invention the RRC signalling protocol between the mobile station and the RNC has to be extended. The extension would allow for transmitting GPS positions and for transmitting data information (GPS positions, received and transmitted power, base station ID) which have been collected in the mobile station for a certain time period. Furthermore, the handover management (request for measurements near geographical areas of poor signal quality) and the handover decision function (distance between a mobile station and the above-mentioned geographical regions must be considered) within the RNC have to be modified. An additional storage memory for the database is required in the base station controller. Finally, a comparison unit (mobile station position to position of geographical area) has to be added to the base station controller.

Another aspect of the invention refers to a mobile station. The mobile station has means for identifying its geographical position and means for storing data. Furthermore it has a computer program or a firmware for carrying out the following steps:
a) measuring the geographical position of the mobile station, said mobile station communicating with a first base station,
b) comparing the geographical position with data from the storage means, said data comprising information on the location of geographical regions, whereby the signal quality in such a region is known to be worse than a predefined level with respect to at least one preselected base station,
c) carrying out measurements on the signal quality of a second base station when the mobile station comes closes to such a region of the first base station,
d) requesting a handover from the communication network if the quality of signals from the second base station is sufficient to take over the service..

Many types of means for identifying a geographical position are known in the prior art. They can be used for the purposes of the present invention when they provide an absolute geographical position such as a latitude (for example 48° 46' 36") and a longitude (for example 9° 10' 48"). A preferred and well known system is the Global Positioning System (GPS). An even better system offering a higher resolution is the future European global positioning system which is currently called Galileo.

It goes without saying that the above-mentioned steps a), b), c), and d) can be carried out by individual program modules of a single computer program or by individual programs. In the latter case the totality of these individual programs should be understood to represent a (single) computer program in the sense of the present invention.

Preferably, the mobile station performs measurements on available neighbour cells in step c) if the mobile station comes close to such a region of the first base station. Then it can in step d) request a handover from the communication network if the received signal quality of neighbour cells is sufficient to take over the service.

These and other aspects of the invention will be apparent from and elucidated with reference to the embodiments described thereafter. It should be noted that the use of reference signs shall not be construed as limiting the scope of the invention.

### Brief description of the drawings:

Fig. 1 shows a communication network according to the prior art,
Fig. 2 shows a geographical area covered by the network,
Fig. 3 schematically shows a mobile station,
Fig. 4 schematically shows a communications system.

### Detailed description of the drawings and of the preferred embodiments

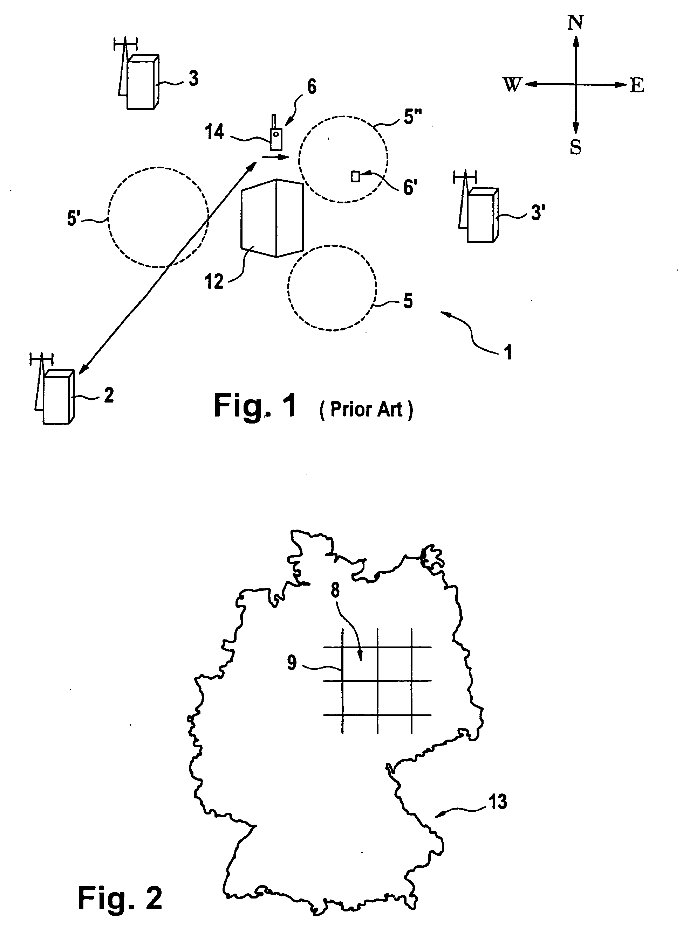

Fig. 1 shows a communication network according to the prior art. The UMTS network 1 comprises a multitude of base stations (node B). For sake of simplicity, only three base stations denoted by 2, 3 and 3' are shown in Fig. 1. The UMTS network covers a whole country 13 as shown in Fig. 2, whereby the coverage within the country 13 is subdivided into geographical areas 8. In Fig. 2 the areas 8 represent a chess-like structure, In a preferred embodiment of the database it also comprises the locations of regions where the signal quality with respect to a certain base station is poor. Each geographical region may be approximated by at least one circle, such that the database contains the position of the centre of the circle and its diameter or radius.

One possibility to create the database is to provide a storage means for the data and by adding data received from mobile stations. In the prior art mobile stations determine the signal quality of the serving link at their location periodically. This data, the geographical position of the mobile station in the moment of collecting these data, and an identification of the base station from which signals have been received and evaluated with respect to their quality, are thus transferred to the storage means.

The availability of the data base offers also new opportunities to optimize the communication network. The data can be used for simulator calculations required for a more efficient dimensioning of the network.

These and other aspects of the invention will be apparent from and elucidated with reference to the embodiments described thereafter. It should be noted that the use of reference signs shall not be construed as limiting the scope of the invention.

### Brief description of the drawings:

Fig. 1 shows a communication network according to the prior art,
Fig. 2 shows a geographical area covered by the network,

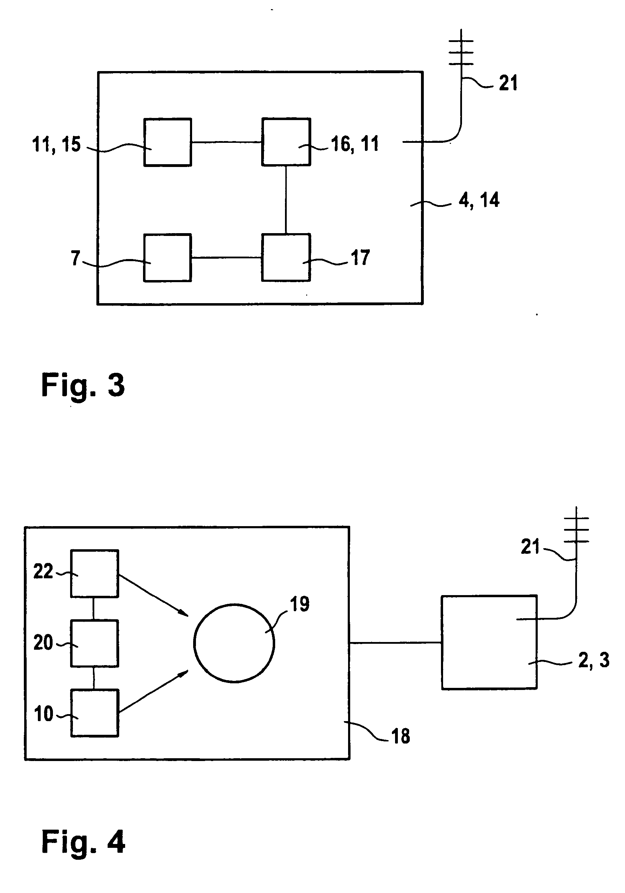

Fig. 3 schematically shows a mobile station
Fig. 4 schematically shows a communications system.

### Detailed description of the drawings and of the preferred embodiments.

Fig. 1 shows a communication network according to the prior art. The UMTS network 1 comprises a multitude of base stations (node B). For sake of simplicity, only three base stations denoted by 2, 3 and 3' are shown in Fig. 1. The UMTS network covers a whole country 13 as shown in Fig. 2, whereby the coverage within the country 13 is subdivided into geographical areas 8. In Fig. 2 the areas 8 represent a chess-like structure, whereby only a small portion is shown for simplicity.

A mobile station 14 has established a connection to node B 2, which is indicated by the arrow between node B 2 and mobile station 14. It is carried eastward by its owner, as it is indicated by the arrow below the mobile station 14. Mobile station 14 has a GPS system, with which its geographic position 6 can be identified. Furthermore, it contains a storage memory 7, cf. Fig. 3, with a database. The database contains the location of geographical regions 5, 5, 5", whereby the signal quality in such a region is known to be worse than a predefined level with respect to at least one preselected base station. In the example of Fig. 1, the database thus knows
■ the location of a geographical region 5, and the fact that the signal quality in this region is poor when a connection to node B 3 exists,
■ the location of a geographical region 5', and the fact that the signal quality in this region is poor when a connection to node B 3' exists,
■ the location of a geographical region 5", and the fact that the signal quality in this region is poor when a connection to node B 2 exists.

As can be derived from Fig. 1, the reason for the poor signal quality in the regions 5, 5' and 5" is the building 12. This building 12 represents an obstacle in the transmission paths from the node Bs 3, 3' and 3" to regions 5, 5' and 5" respectively.

Fig. 3 shows a mobile station 14 in a schematic way. It comprises a GPS sensor 15, which sends the received signals to a GPS logic 16 to identify the position of the mobile station. This information is transferred to microprocessor 17, which has access to a database stored in storage memory 7. The database contains information of the location of regions 5, 5' and 5" and the node Bs associated with these regions. When the mobile station 14 moves eastward in Fig. 1, it comes close to region 5", in which the signal quality is poor when the mobile station 14 is connected to node B 2. Consequently, there is the risk that the radio link quality becomes worse abruptly, or that the connection breaks down altogether.

The mobile station 14 calculates the shortest distance from its own position 6 to region 5". This may be done constantly, or in a repetitive fashion. For doing that, is uses the location of the centre of the region 5", which is approximated by a circle, and the diameter of the circle from the database stored in the mobile station 14. If it comes sufficiently close to region 5" it starts measuring the signal strengths received from other node Bs such as node B 3 or node B 3' and transmits these measurement values in combination with a handover request to node B 2. A base station controller 19, cf. Fig. 4, decides to perform the handover as requested by the mobile station 14. This is done by a handover unit 10 which instructs the CDMA interconnect system 19 of base station controller 19 accordingly. Taking account of the above measurement values it decides to arrange a handover to node B 3.

The mobile station 14 may move into region 5". Due to the pre-emptive handover the signal quality within this region, for example at the new position 6', is far better than without the handover. The reason is that region 5" is not a shadowed region for new node B 3.

Fig. 4 shows that the base station controller 19 may also have a database 22 with the locations of regions of poor signal quality, such as regions 5, 5' and 5". In this case the mobile station 14 informs its associated node B only of its position. A comparison unit 20 calculates the shortest distance from the current position 6 to a region of poor signal quality such as region 5". If the mobile station comes close to region 5" the base station controller requests the mobile station to deliver measurement results of the signal quality of node B 3 and node B 2. Then, the base station controller 19 may decide to do a handover to the neighbouring cell with the best signal quality.

### List of reference numerals

- 01: communication network
- 02: first base station
- 03: second base station
- 04: mobile station
- 05: geographical region with poor signal quality
- 06: geographical position of mobile station
- 07: storage memory
- 08: geographical area
- 09: boundary of geographical area
- 10: means for carrying out a handover
- 11: location identification means
- 12: building
- 13: country
- 14: mobile station
- 15: GPS sensor
- 16: GPS logic
- 17: microprocessor
- 18: base station controller
- 19: CDMA interconnect system
- 20: comparison unit
- 21: antenna
- 22: database

## Claims

1. Method for carrying out a handover in a communication network (1), the communication network having at least a first base station (2) and a second base station (3), the method comprising the following steps:
a) measuring the geographical position (6) of a mobile station (4) while the mobile station communicates with the first base station (2),
b) comparing the geographical position with data comprising information on the location of geographical regions (5), whereby the signal quality in such a region is known to be worse than a predefined level with respect to at least one preselected base station,
c) performing a handover to the second base station when the mobile station is close to such a region of the first base station,
**characterized in that**
after step b) measurements on the signal quality of the second base station are carried out when the mobile station comes close to such a region of the first base station, and that the handover is performed if the quality of signals from the second base station is sufficient to take over the service.

2. Method according to claim 1,
**characterized in that**
the first base station and the second base station satisfy same or different standards for communications systems, and particularly refer to UMTS systems, WIMAX systems, or WLAN systems.

3. Method according to claim 1,
**characterized in that**
the mobile station measures its geographical position (6) and transfers this information to the communication network, that the communication network determines the proximity of the mobile station to a geographical region with poor signal quality, and that the communication network requests the measurements on the signal quality of the second base station from the mobile station when the mobile station is close to such a region of the first base station.

4. Method according to claim 1,
**characterized in that**
the data is stored in a storage memory (7) of the mobile station, that the mobile station measures its geographical position and determines its proximity to a geographical region with poor signal quality using the data, and that the mobile station requests the handover from the communication network if it comes close to such a region of the first base station.

5. Method according to claim 4,
**characterized in that**
the data refers to a geographical area (8) of predefined spatial extension, and that the mobile station is located in this geographical area.

6. Method according to claim 5,
**characterized in that**
the data is updated when the mobile station reaches the boundary (9) of the geographical area.

7. Method according to claim 5,
**characterized in that**
the data is updated when the signal quality has permanently changed within the geographical area.

8. Mobile station, with means (11) for identifying its geographical position (6), with means (7) for storing data, and with a computer program for carrying out the following steps:
a) measuring the geographical position of the mobile station (4), said mobile station communicating with a first base station (2),
b) comparing the geographical position with data from the storage means, said data comprising information on the location of geographical regions (5), whereby the signal quality in such a region is known to be worse than a predefined level with respect to at least one preselected base station,
c) requesting a handover to a second base station from the communication network (1) when the mobile station comes close to such a region of the first base station (2),
**characterized in that**
after step b) measurements on the signal quality of the second base station are carried out when the mobile station comes close to such a region of the first base station, and that the handover is requested if the signal quality of the second base station is sufficient to take over the service.

9. Mobile station according to claim 8,
**characterized in that**
it is adapted to transfer data to the communication network, said data comprising
a) geographical positions (6),
b) the signal quality measured by the mobile station at said geographical positions,
c) the power, which has been transmitted at the base station, and
d) identifications of the base stations from which the corresponding signals were received.

10. A computer program product comprising a computer readable medium, having thereon computer program code means which, when said program is loaded, make a computer execute the following steps:
a) measuring the geographical position (6) of a mobile station (4), said mobile station communicating with a first base station (2) of a communication network (1),
b) comparing the geographical position with data comprising information on the location of geographical regions (5), whereby the signal quality in these regions is known to be worse than a predefined level with respect to at least one preselected base station,
c) requesting a handover to a second base station (3) of the communication network when the mobile station comes close to such a region of the first base station (2),
**characterized in that**
the computer program code means are adapted to make the computer carry out measurements on the signal quality of the second base station when the mobile station comes close to such a region of the first base station, and request the handover if the quality of signals from the second base station is sufficient to take over the service.

## Patentansprüche

1. Verfahren zur Durchführung eines Handovers in einem Kommunikationsnetzwerk (1), wobei das Kommunikationsnetzwerk mindestens eine erste Basisstation (2) und eine zweite Basisstation (3) umfasst und wobei das Verfahren die folgenden Schritte umfasst:
a) Messen der geografischen Position (6) einer Mobilstation (4), während die Mobilstation mit der ersten Basisstation (2) kommuniziert,
b) vergleichen der geografischen Position mit Daten, die die Position von geografischen Regionen (5)enthalten, wobei die Signalqualität in einer solchen Region bekanntermaßen schlechter ist als ein vordefinierter Pegelwert hinsichtlich mindestens einer vorausgewählten Basisstation,
c) Durchführen eines Netzwerkwechsels zu einer zweiten Basisstation, wenn sich die Mobilstation in der Nähe eines solchen Bereichs der ersten Basisstation befindet,
**dadurch gekennzeichnet, dass**
nach Schritt b) Messungen zur Signalqualität der zweiten Basisstation durchgeführt werden, wenn sich die Mobilstation einer solchen Region der ersten Basisstation nähert, und dass der Netzwerkwechsel durchgeführt wird, wenn die Qualität der Signale von der zweiten Basisstation zur Übernahme des Dienstes ausreicht.

2. Verfahren gemäß Anspruch 1,
**dadurch gekennzeichnet, dass**
die erste Basisstation und die zweite Basisstation gleiche oder unterschiedliche Standards für Kommunikationssysteme erfüllen, insbesondere für UMTS-Systeme, WIMAX-Systeme oder WLAN-Systeme.

3. Verfahren gemäß Anspruch 1,
**dadurch gekennzeichnet, dass**
die Mobilstation ihre geografische Position (6) misst und diese Information an das Kommunikationsnetzwerk sendet, dass das Kommunikationsnetzwerk die Nähe der Mobilstation zu einer geografischen Region mit schlechter Signalqualität ermittelt und dass das Kommunikationsnetzwerk die Messungen der Signalqualität der zweiten Basisstation von der Mobilstation anfordert, wenn die Mobilstation sich in der Nähe einer solchen Region der ersten Basisstation befindet.

4. Verfahren gemäß Anspruch 1,
**dadurch gekennzeichnet, dass**
die Daten in einem Speicher (7) der Mobilstation abgelegt werden, dass die Mobilstation ihre geografische Position misst und dass sie ihre Nähe zu einer geografischen Region mit schlechter Signalqualität mithilfe der Daten ermittelt, und dass die Mobilstation vom Kommunikationsnetzwerk den Netzwerkwechsel anfordert, wenn sie sich einer solchen Region der ersten Basisstation nähert.

5. Verfahren gemäß Anspruch 4,
**dadurch gekennzeichnet, dass**
sich die Daten auf einen geografischen Bereich (8) mit einer vordefinierter räumlichen Ausdehnung beziehen und dass sich die Mobilstation in diesem geografischen Bereich befindet.

6. Verfahren gemäß Anspruch 5,
**dadurch gekennzeichnet, dass**
die Daten aktualisiert werden, wenn die Mobilstation die Begrenzung (9) des geografischen Bereichs erreicht.

7. Verfahren gemäß Anspruch 5,
**dadurch gekennzeichnet, dass**
die Daten aktualisiert werden, wenn sich die Signalqualität innerhalb des geografischen Bereichs dauerhaft geändert hat.

8. Mobilstation mit Mitteln (11) zum Kennzeichnen ihrer geografischen Position (6), mit Mitteln (7) zum Speichern von Daten und mit einem Computerprogramm zum Ausführen der folgenden Schritte:
a) Messen der geografischen Position der Mobilstation (4), wobei diese Mobilstation mit einer ersten Basisstation (2) kommuniziert,
b) Vergleichen der geografischen Position mit den Daten aus den Speichermitteln, wobei diese Daten Informationen über die Position der geografischen Regionen (5) umfassen, wobei die Signalqualität in einer solchen Region bekanntermaßen schlechter ist als ein vordefinierter Pegelwert hinsichtlich mindestens einer vorausgewählten Basisstation,
c) Anfordern eines Netzwerkwechsels vom Kommunikationsnetzwerk (1) zu einer zweiten Basisstation, wenn sich die Mobilstation einer solchen Region der ersten Basisstation (2) nähert,
**dadurch gekennzeichnet, dass**
nach Schritt b) Messungen zur Signalqualität der zweiten Basisstation durchgeführt werden, wenn sich die Mobilstation einer solchen Region der ersten Basisstation nähert, und dass der Netzwerkwechsel angefordert wird, wenn die Signalqualität der zweiten Basisstation zur Übernahme des Dienstes ausreicht.

9. Mobilstation gemäß Anspruch 8,
**dadurch gekennzeichnet, dass**
diese Station angepasst ist zum Übertragen von Daten an das Kommunikationsnetzwerk, wobei diese Daten Folgendes umfassen:
a) geografische Positionen (6),
b) die von der Mobilstation gemessene Signalqualität an diesen geografischen Positionen,
c) die an der Basisstation gesendete Leistung, und
d) Kennzeichnungen der Basisstationen, von denen die entsprechenden Signale empfangen wurden.

10. Computerprogrammprodukt mit einem computerlesbaren Medium, auf dem Computer-Programmcode gespeichert ist, der nach dem Laden die Ausführung der folgenden Schritte durch den Computer veranlasst:
a) Messen der geografischen Position (6) einer Mobilstation (4), wobei diese Mobilstation mit einer ersten Basisstation (2) eines Kommunikationsnetzwerks (1) kommuniziert,
b) Vergleichen der geografischen Position mit den Daten zur Position der geografischen Regionen (5), wobei die Signalqualität in diesen Regionen bekanntermaßen schlechter ist als ein vordefinierter Pegelwert hinsichtlich mindestens einer vordefinierten Basisstation,
c) Anfordern eines Netzwerkwechsels zu einer zweiten Basisstation (3) des Kommunikationsnetzwerks, wenn sich die Mobilstation einer solchen Region der ersten Basisstation (2) nähert,
**dadurch gekennzeichnet, dass**
die Computer-Programmcodemittel so angepasst sind, dass sie den Computer veranlassen, Messungen zur Signalqualität der zweiten Basisstation durchzuführen, wenn sich die Mobilstation einem solchen Bereich der ersten Basisstation nähert, und den Netzwerkwechsel anzufordern, wenn die Qualität der Signale von der zweiten Basisstation zur Übernahme des Dienstes ausreicht.

## Revendications

1. Procédé permettant d'exécuter un transfert intercellulaire dans un réseau de communication (1), le réseau de communication possédant au moins une première station de base (2) et une seconde station de base (3), le procédé comprenant les étapes suivantes :
a) mesure de la position géographique (6) d'une station mobile (4), pendant que la station mobile communique avec la première station de base (2),
b) comparaison de la position géographique avec des données comprenant des informations sur la localisation des régions géographiques (5), grâce à quoi on sait que la qualité de signal dans ces régions est inférieure à un niveau prédéfini en relation avec au moins une station de base présélectionnée,
c) réalisation d'un transfert sur la seconde station de base lorsque la station mobile est proche d'une telle région de la première station de base,
**caractérisé en ce que**
après l'étape b), des mesures de la qualité de signal de la seconde station de base sont réalisées lorsque la station mobile s'approche d'une telle région de la première station de base et **en ce que** le transfert est exécuté si la qualité de signal de la seconde station de base est suffisante pour prendre en charge le service.

2. Procédé selon la revendication 1, **caractérisé en ce que**
la première station de base et la seconde station de base satisfont à des standards identiques ou différents de systèmes de communication, et se réfèrent en particulier à des systèmes UMTS, des systèmes WIMAX ou des systèmes WLAN.

3. Procédé selon la revendication 1, **caractérisé en ce que**
la station mobile mesure sa position géographique (6) et transfère cette information au réseau de communication, le réseau de communication détermine la proximité de la station mobile avec une région géographique à faible qualité de signal et le réseau de communication demande les mesures de la qualité de signal de la seconde station de base à la station mobile lorsque la station mobile est proche d'une telle région de la première station de base.

4. Procédé selon la revendication 1, **caractérisé en ce que**
les données sont stockées dans une mémoire de stockage (7) de la station mobile, la station mobile mesure sa position géographique et détermine sa proximité avec une région géographique à faible qualité de signal en utilisant les données, et la station mobile demande le transfert au réseau de communication si elle s'approche d'une telle région de la première station de base.

5. Procédé selon la revendication 4, **caractérisé en ce que**
les données se réfèrent à une zone géographique (8) ayant une extension spatiale prédéfinie, et la station mobile est située dans cette zone géographique.

6. Procédé selon la revendication 5, **caractérisé en ce que**
les données sont mises à jour lorsque la station mobile atteint la limite (9) de la zoné géographique.

7. Procédé selon la revendication 5, **caractérisé en ce que**
les données sont mises à jour lorsque la qualité de signal a définitivement changé dans la zone géographique.

8. Station mobile comprenant des moyens (11) lui permettant d'identifier sa position géographique (6), des moyens (7) permettant de stocker des données et un programme informatique permettant d'exécuter les étapes suivantes :
a) mesure de la position géographique de la station mobile (4), ladite station mobile communiquant avec une première station de base (2),
b) comparaison de la position géographique avec des données en provenance du moyen de stockage, lesdites données comprenant des informations sur la localisation de régions géographiques (5), grâce auxquelles on sait que la qualité de signal dans ces régions est inférieure à un niveau prédéfini en relation avec au moins une station de base présélectionnée,
c) demande de transfert sur une seconde station de base au réseau de communication (1) lorsque la station mobile s'approche d'une telle région de la première station de base (2),
**caractérisée en ce que**
après l'étape b), des mesures de la qualité de signal de la seconde station de base sont réalisées lorsque la station mobile s'approche d'une telle région de la première station de base et **en ce que** le transfert est demandé si la qualité de signal de la seconde station de base est suffisante pour prendre en charge le service.

9. Station mobile selon la revendication 8, **caractérisée en ce que**
elle est adaptée pour transférer des données au réseau de communication, lesdites données comprenant
a) les positions géographiques (6)
b) la qualité de signal mesurée par la station mobile auxdites positions géographiques,
c) la puissance qui a été transmise à la station de base, et
d) les identifications des stations de base depuis lesquelles les signaux correspondants ont été reçus.

10. Produit de programme informatique comprenant un support lisible par ordinateur, possédant un moyen de code de programme informatique qui, lorsque ledit programme est chargé, amène un ordinateur à exécuter les étapes suivantes :
a) mesure de la position géographique d'une station mobile (4), ladite station mobile communiquant avec une première station de base (2) d'un réseau de communication (1),
b) comparaison de la position géographique avec des données comprenant des informations sur la localisation de régions géographiques (5), grâce auxquelles on sait que la qualité de signal dans ces régions est inférieure à un niveau prédéfini en relation avec au moins une station de base présélectionnée,
c) demande de transfert sur une seconde station de base (3) du réseau de communication lorsque la station mobile s'approche d'une telle région de la première station de base (2),
**caractérisé en ce que**
le moyen de code de programme informatique est adapté pour amener l'ordinateur à réaliser des mesures de la qualité de signal de la seconde station de base lorsque la station mobile s'approche d'une telle région de la première station de base, et pour demander le transfert si la qualité de signal de la seconde station de base est suffisante pour prendre en charge le service.
